# EUROPEAN PATENT APPLICATION

(11) **EP 2 869 197 A1**
(43) Date of publication of application: **06.05.2015**
(21) Application number: 14003677.3
(22) Date of filing: 30.10.2014
(51) Int. Cl.: G06F 9/48, G06F 9/445

(54) **Automated procedure for kernel change**

(30) Priority: 31.10.2013 US 201314068467
(71) Applicant: SAP SE, 69190 Walldorf (DE)
(72) Inventor: Braemer, Achim, 69190 Walldorf (DE); Braun, Bernhard, 69190 Walldorf (DE); Goldbach, Christian, 69190 Walldorf (DE); Hammer, Guenter, 69190 Walldorf (DE); Lott, Edgar, 69190 Walldorf (DE); Mueller, Jochen, 69190 Walldorf (DE); Neufeld, Andrea, 69190 Walldorf (DE); Rehm, Werner, 69190 Walldorf (DE); Rinck, Matthias, 69190 Walldorf (DE); Trapp, Michael, 69190 Walldorf (DE); Werner, Randolf, 69190 Walldorf (DE); Wolfanger, Sven, 69190 Walldorf (DE)
(74) Representative: Müller-Boré & Partner Patentanwälte PartG mbB

(57) **Abstract**

A kernel provides a mechanism allowing various applications (e.g. CRM, logistics, procurement, etc.) hosted on a plurality of different application servers, to share access to a common underlying system (e.g. database). An automated process for implementing a kernel change (e.g. for upgrade or replacement) may employ a "Stop-the-World" approach involving suspension of application server instances, coordinated by the start service of the last application server whose kernel is to be changed. As used herein, suspending refers to halting any processing prior to calling a central service (CS) as long as a CS instance is unavailable, and then to resuming processing once the CS instance becomes available. This suspension of relevant clients avoids errors from arising during the downtime of the CS instance. Once the application server instances are in a stopped state, the CS instance is restarted. Then, the application server instances are resumed, and their kernels are changed.

## Description

### BACKGROUND

Embodiments relate to management of processes in a computer system, and in particular to an automated process for implementing a kernel change.

Unless otherwise indicated herein, the approaches described in this section are not prior art to the claims in this application and are not admitted to be prior art by inclusion in this section.

Certain types of computer systems may provide a common interface between a specific resource/functionality and a plurality of applications accessing that resource/functionality. One example of this type of architecture is presented for a database system accessed by a plurality of overlying applications.

Specifically, a plurality of different application servers may host different application types. Examples of such application types include Customer Relationship Management (CRM), financials (FIN), procurement, logistics, and others etc. These different application types may seek to communicate with the same underlying database through a common interface. That common interface is also referred to herein as a "kernel".

For purposes of maintenance or upgrade, on occasion it can become necessary to replace the kernel and to change its properties. Conventional approaches for changing a kernel may involve substantial disruption to users.

In particular, the application servers seeking to access the common resource via the kernel, need to be manually shut down during its period of inoperability. This can negatively impact system functionality, since currently running service requests are aborted.

Thus, there is a need for a process for implementing a kernel change in a non-disruptive fashion.

### SUMMARY

A kernel provides an mechanism allowing various applications (e.g., CRM, logistics, procurement, etc.) hosted on a plurality of different application servers, to share access to a common underlying system (e.g. database). An automated process for implementing a kernel change (e.g., for upgrade) may employ a "Stop-the-World" approach involving suspension of application server instances, coordinated by the start service of the last application server whose kernel is to be changed. As used herein, suspending refers to halting any processing prior to calling a Central Service (CS) as long as a CS instance is unavailable, and then to resuming processing once the CS instance becomes available. This suspension of relevant clients avoids errors from arising during the downtime of the CS instance. Once the application server instances are in a stopped state, the CS instance is restarted. Then, the application server instances are resumed, and their kernels changed.

An embodiment of a computer-implemented method comprises causing a central services instance to receive a kernel change instruction from a first control engine of a first application server. In response to the kernel change instruction, a second control engine of the central services instance is caused to suspend operation of the first application server and to suspend operation of a second application server. The central services instance is caused to restart operation with a new kernel. The new kernel of the central services instance is caused to resume operation of the first application server and of the second application server, such that the first control engine instructs the second application server to restart with the new kernel, and instructs the first application server to restart with the new kernel.

An embodiment of a non-transitory computer readable storage medium embodies a computer program for performing a method comprising causing a central services instance to receive a kernel change instruction from a first control engine of a first application server. In response to the kernel change instruction, a second control engine of the central services instance is caused to suspend operation of the first application server and to suspend operation of a second application server. The central services instance is caused to restart operation with a new kernel. The new kernel of the central services instance is caused to resume operation of the first application server and of the second application server, such that the first control engine instructs the second application server to restart with the new kernel, and instructs the first application server to restart with the new kernel.

An embodiment of a computer system comprises one or more processors and a software program executable on said computer system. The software program is configured to cause a central services instance to receive a kernel change instruction from a first control engine of a first application server. In response to the kernel change instruction, a second control engine of the central services instance is caused to suspend operation of the first application server and to suspend operation of a second application server. The central services instance is caused to restart operation with a new kernel. The new kernel of the central services instance is caused to resume operation of the first application server and of the second application server, such that the first control engine instructs the second application server to restart with a new kernel, and instructs the first application server to restart with a new kernel.

In certain embodiments the second control engine instructs a message center of an old kernel of the central services instance to suspend operation, after suspension of operation of the first application server and of the second application server. The second control engine instructs a message center of the new kernel of the central services instance to resume operation prior to resuming operation of the first application server and of the second application server.

Some embodiments further comprise, prior to the central services instance receiving the kernel change instruction, causing the first control engine to trigger an Enqueue services instance to change from an old kernel to the new kernel.

According to particular embodiments, during restart of the central services instance, an existing Enqueue table and a backup file are attached.

In various embodiments, the second control engine attaches the existing Enqueue table and the backup file by attaching to an existing Enqueue lock table shared memory, halting a Enqueue server of the old kernel, stopping remaining processes of the old kernel, and restarting the central services instance by signaling a Enqueue server of the new kernel to reattach to the existing Enqueue lock table shared memory.

According to particular embodiments, the new kernel of the first application server, and the new kernel of the second application server, are each in communication with a database.

The following detailed description and accompanying drawings provide a better understanding of the nature and advantages of various embodiments.

### BRIEF DESCRIPTION OF THE DRAWINGS

Figure 1 shows a simplified view of an embodiment of a computer system employing an automated kernel change procedure according to an embodiment.
Figure 2 shows a simplified flow diagram of an automated kernel change procedure according to an embodiment.
Figure 3 shows a simplified view of an embodiment of a computer system employing an automated kernel change procedure according to one specific example.
Figure 4 illustrates an example of a computer system.

### DETAILED DESCRIPTION

Described herein are techniques for an automated process of implementing a kernel change. For purposes of explanation, numerous examples and specific details are set forth in order to provide a thorough understanding of the present invention. It will be evident, however, to one skilled in the art that the present invention as defined by the claims may include some or all of the features in these examples alone or in combination with other features described below, and may further include modifications and equivalents of the features and concepts described herein.

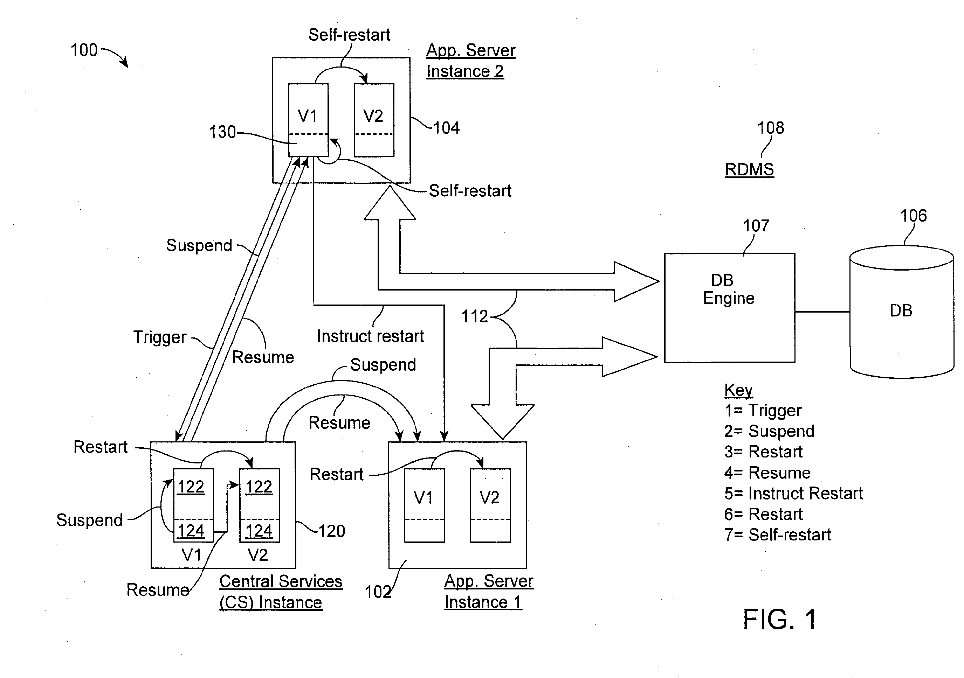

Figure 1 shows a simplified view of an embodiment of a computer system in accordance with an embodiment. In particular, computer system 100 comprises a first application server 102 and a second application server 104. These application servers of the single computer system host the same application.

The application servers 102, 104 rely upon a common set of data present in an underlying database 106, access to which is controlled by a database engine 107. Accordingly, the application servers 102, 104 share access to a relational database management system (RDMS) 108. In particular, the application servers 102, 104 utilize a kernel mechanism 112 to communicate with the database engine of the RDBMS. The kernel mechanism may be implemented by a vendor specific database library.

On occasion, in order to correct errors or to deploy new features, the respective kernels present in the application data servers 102, 104 must be updated. As generally depicted in Figure 1, an old version of a kernel is labeled V1, and a new kernel version is labeled V2.

Embodiments relate to a procedure that changes the kernels of a plurality of application servers, in an automated fashion with minimal disruption to operation of the computer system. In particular, certain embodiments employ a "Stop-the-World" approach involving suspension of application server instances, coordinated by the start service of the last application server whose kernel is to be changed. This suspension of relevant clients prevents errors from arising during the downtime of the Central Service (CS) instance. Once the application server instances are in a stopped state, the CS instance is restarted. Then, the application server instances are resumed, their kernels changed.

Figure 1 shows a summary of this automated process according to an embodiment. In a first step 1, the last application server whose kernel is to be changed, contacts a central service (CS) server 120 in order to trigger the process.

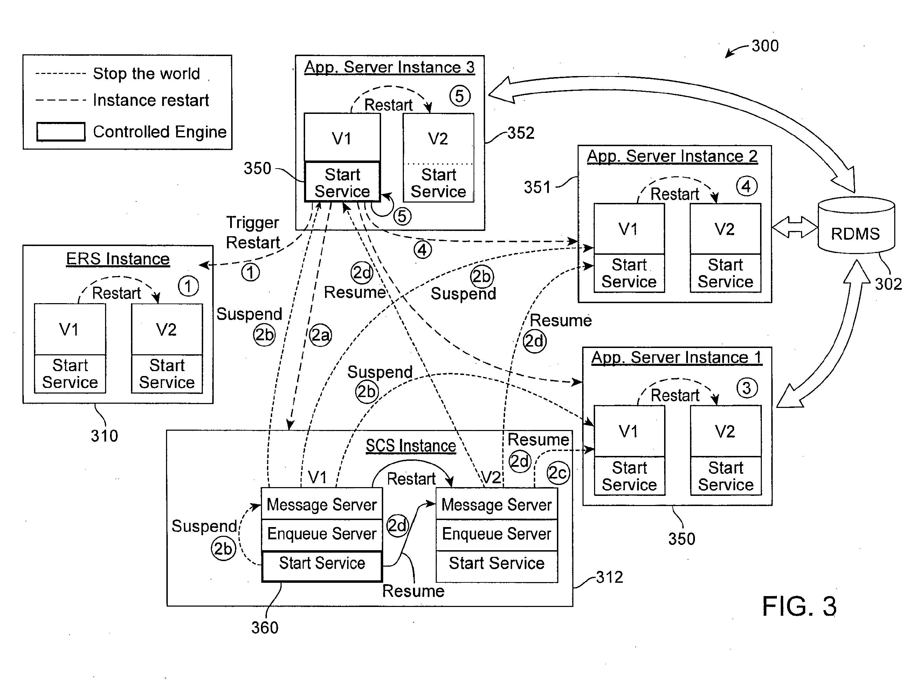

The CS server instance 120 comprises a message server 122 and a start service 124. An Enqueue server (as is shown and further described below in connection with Figure 3), may also be present. In a second step 2, the start service 124 controls the CS instance to implement a "Stop-the-World" approach. In particular, the start service 124 sends the suspend request to the message server 122 of V1 to contact both of the application servers 102 and 104 to suspend their operation. The start service 124 also suspends operation of the message server 122. As used herein, suspending refers to halting any processing prior to calling a central service (CS) as long as a CS instance is unavailable, and then to resuming processing once the CS instance becomes available.

In a third step 3, while the application servers 102 and 104 and the message server 122 are suspended, the CS service goes through a restart, switching kernels from V1 to V2. In a fourth step, the controlling start service 124 of the old kernel V1 sends a resume request to the message server 122 of the V2 kernel of the CS instance. The message server 122, in turn, communicates this resume request to the application servers, which now again begin processing.

In a fifth step 5, the start service 130 of the now-resumed V1 kernel of the last application server instance to be changed 104, sends a message to the other application server 102 to restart. In a sixth step 6 this restart occurs to switch between kernel V1 and kernel V2 in that server.

Finally, in a sixth step 7, the start service 130 of the last application server instance to be changed 104, instructs restart of the application server instance 104 to switch from the old kernel V1 to the new kernel V2.

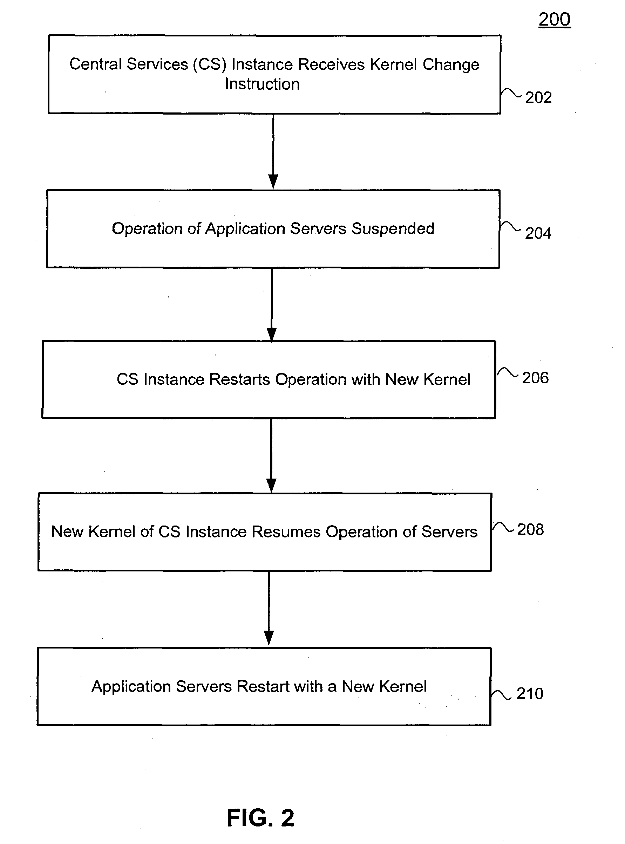

Figure 2 shows a simplified flow diagram of an automated kernel change procedure 200 according to an embodiment. In a first step 202, a central services instance is caused to receive a kernel change instruction from a first control engine of a first application server.

In a second step 204, in response to the kernel change instruction, a second control engine of the central services instance is caused to suspend operation of all application servers.

In a third step 206, the central services instance is caused to perform a restart operation with a new kernel.

In a fourth step 208, a new kernel of the central services instance is caused to resume operation of the first application server and of the second application server. In a fifth step 210, the second application server restarts using a new kernel, and then the first application server restarts using a new kernel.

As illustrated and described above, the start service of the last application server instance to be updated, and the start service of the central service, coordinate together to perform kernel switching in an automated fashion in a manner that is least disruptive to users of the computer system. Further details are now provided below in connection with an example involving automated kernel switching in a computer system comprising an RDMS available from SAP AG of Walldorf, Germany.

### EXAMPLE

An example of an embodiment of an automated kernel change procedure in the context of a database system provided by SAP AG of Walldorf, Germany, is now described in conjunction with Figure 3. In the context of SAP computer systems, the term Advanced Business Application Programming (ABAP) refers to the programming language in which SAP business applications are written. It is interpreted by the so-called ABAP kernel.

The exemplary system 300 of Figure 3 differs from the simplified system of Figure 1 in certain particulars. For example, the system 300 comprises the SAP RDMS 302 that is in communication with three (3) rather than two (2) different application servers 350, 351, 352, whose kernels are to be changed.

Another difference between the general system depicted in Figure 1 and the SAP-specific system 300 of Figure 3, is the presence of the Enqueue Replication Server (ERS) instance 310. Also, the SAP Central Services (SCS) instance 312 plays the role of the CS instance described in Figure 1.

The online system restart procedure according to this specific example, is now described. The ABAP kernel is generally patched in the following manner. The new kernel version is placed into the central directory for executables and then all instances are restarted.

During restart, the instances automatically use the new kernel version. In particular embodiments the restart of all instances happens automatically and in sequence, in order to minimize the impact of the running system.

The procedure is controlled by the SAP Start Service (sapstartsrv). The instances are restarted in the following order:
(a) the Enqueue Replication Server instance (if present);
(b) the SAP Central Services (SCS) instance; and
(c) the application server instances (in no specific order).

The restart procedure is controlled by the Start Service of the instance which is to be restarted last. That controlling Start Service does not maintain persistence of the state of the restart procedure. As a final step of the SCS instance restart procedure, the Start Service restarts itself and thereby terminates the procedure.

The following describes specific steps of the exemplary procedure referenced in the Figure 3. Within all of the instances, the ABAP kernel is switched to the new version (V1 → V2). The various different types of instances (Enqueue, SCS, application) have different executables which are subsumed by the notion of ABAP kernel. The application server instances each have a connection to the SAP RDMS.

The procedure relies upon two controller engines. A first controller engine is the start service 350 of the application server instance 352 that is to be restarted last. A second controller engine is the start service 360 of the SCS instance 312.

The first controller engine triggers the restart of different instances within the system. These include:
- restart of ERS (see 1 in Figure 3; Trigger Restart of ERS Instance below)
- restart of SCS Instance (see 2a in Figure 3)
- restart of the application server instance 1 (see 3 in Figure 3)
- restart of the application server instance 2 (see 4 in Figure 3)
- restart of the final application server instance 3 (see 5 in Figure 3)

An important phase of the procedure is the restart of the SCS Instance (see "SCS Instance Restart" below). The SCS instance comprises the message server and the Enqueue server.

This phase is controlled by the start service of the SCS instance, and is based on the "Stop-the-World" approach (shown dashed in Figure 3). The start service sends the suspend request to the message server of version 1 (see 2b in Figure 3 and "Trigger Suspension of All Active Application Server Instances" below).

The message server sends a suspend request to all application servers (see 2b in Figure 3). The SCS instance is restarted (see 2c in Figure 3 arid "Restart the SCS instance" below).

The controlling start service sends a resume request to the message server of version 2 (see 2d in Figure 3 and "Resume All Application Server Instances" below).

The message server forwards the resume request to all application servers (see 2d in Figure 3).

Further details regarding this specific example are now provided. As part of the application server instance restart, its start service (the first controller engine) notifies the application server instance that the reason for restart is an online restart procedure. The first application server instance sends a message to all other application server instances.

All instances then go into a state of "not yet restarted". This flag is volatile and cleared when the instance restarts.

A soft shutdown state may be used to lessen the impact of restart and changed kernel. In particular, when an instance receives the restart signal, it goes into a soft shutdown, which waits for logged-on users and running jobs. During a soft shutdown, all users receive a system message telling them to log off and on again. This new logon will automatically migrate to another server.

The administrator specifies a shutdown timeout when starting the procedure. After this timeout, the instance is shutdown. All users are logged off, and jobs that are still running are terminated.

A goal is to minimize the number of times that each user has to move to another server. A number of moves of an individual user may be minimized by ensuring that users are moved only to instances which have already been restarted. Only users that worked on the instance that gets restarted first, have to be moved twice

Restart of an Enqueue Replication Server instance is now described. In some embodiments, the Enqueue replication instance may be restarted without any special treatment. Under such circumstances, replication is triggered two times.

Restart of a SAP Central Services (SCS) instance is now described. In some embodiments, the SCS instance may include both a message service and an Enqueue service. The former relates to sending/receiving messages between the application servers of a system via the message server. The Enqueue service serves as a central lock handler of the system.

Restarting the SCS instance during the kernel change may have one or more of the following undesired effects: messages might be lost and operations for the Enqueue server might be lost.

Thus, a SCS restart procedure according to embodiments may implement a "Stop-the-world" approach. In particular, before restarting the SCS instance all relevant clients are suspended in order to avoid errors arising during the downtime of the SCS instance.

Here, the term "suspending" does not necessarily require shutting down the clients. Rather, as used in this context, "suspending" refers to halting any processing prior calling an SCS service as long as the SCS instance is not available and to resuming processing once the SCS instance becomes available.

The most prominent SCS clients may be the application server instances. For the message server, however, there are at least the following additional clients: the logon group (LG) layer; and the Web Dispatcher. The application server instances are discussed first, and treatment of the other clients is reserved for later.

In an embodiment, the "SCS restart procedure" includes the following steps:
1) trigger suspension of active application server instances;
2) wait until all application server instances are in state: "STOPPED";
3) restart the SCS instance;
4) resume application server instances.

According to particular embodiments, these steps could be executed by an instance of the sapstartsrv. Alternatively, these steps could be executed by the instance controlling the SCS. The steps 1)-4) above are now discussed in more detail.

### Trigger Suspension of All Active Application Server Instances

Regarding step 1), it has already been mentioned that the restart procedure is controlled by the Start Service of the SCS instance (sapstartsrv). In order to suspend all application server instances, this sapstartsrv will send the suspend request to the message server (MsSndSuspend).

In response, the message server sets its internal state to "system suspend started" and send a request (MSESUSPEND) to all application servers. A system suspend file will be created in the working directory (ms_system_suspend_active).

Inside the application server instance, the following will happen. A dispatcher sets server global fields serverStopped = YES, serverStoppedReason = SCS_RESTART. The current server list will be used as long as the server has not been resumed.

Request processing in the kernel occurs as follows. Before sending a message to the message server or issuing a request to the Enqueue server, the kernel will check whether a message server response is outstanding. If this is the case, then the message server message or respectively the Enqueue request is sent. If not, the kernel will suspend the request processing.

To check that there is no outstanding SCS "action" an ABAP application server counts both message server and Enqueue operations, as well as sessions with pending message server responses. As soon as these counters are zero, the server does the following:
- reports that it is suspended to its local sapstartsrv ("SERVER STOPPED");
- sets a special flag SERVER_STOPPED in the server list indicating that it is suspended, making this immediately clear to any other server.

Also, if all servers are suspended (have set the flag SERVER_STOPPED) any application server instance can report "SYSTEM STOPPED" to its local sapstartsrv, indicating that the entire system is suspended.

### Wait Until All Application Server Instances Are Suspended (state "STOPPED")

The step 2) from the above sequence, is now described. In particular, that step 2) calls for waiting until all application server instances are suspended (state "STOPPED").

Specifically, the message server reports the system suspend state with the function MsIsSuspended(). This function is periodically called by sapstartsrv.

The "system suspend state" is set to TRUE when all application servers set their internal state to MS_SYSTEM_SERVICE_SERVER_SUSPENDED. During this step connects of new application server are rejected.

The controlling sapstartsrv waits until the function MsIsSuspended() returns TRUE.

In case of a timeout, however, the involved sessions could be handled in one or more of the following ways. Sessions with pending message server (ms) responses could be aborted. Sessions with open ms calls could be aborted. Sessions with open Enqueue calls could be aborted. However, such a time out would have some impact on users. Accordingly, embodiments may seek to avoid use of a timeout.

### Restart the SCS Sequence

The step 3) above calls for restart of the SCS instance. In the case of the automated kernel change according to embodiments, the SCS instance restart is different from a normal SCS restart to prevent losing the existing Enqueue table and the backup file.

Instead, these segments/files will be attached from the new Enqueue server. To achieve this, the sapstartsrv of the SCS instance attaches to the Enqueue lock table shared memory, terminates the Enqueue server, stops the remaining processes of the instance and restarts the instance signaling the Enqueue server (by writing temporary file "enserver_attach_shm") to reattach to the existing Enqueue lock table shared memory. With this approach, the time needed for the restart is more or less independent from the size of the current lock table.

The purpose of the message server's table of instances and logon groups (LGs) is to reach the system from the outside by Remote Function Call (RFC). Logon groups (LGs) comprising two or more application servers are used to distribute the users (and the load) to available application servers. To minimize this downtime and ensure that clients do not receive spurious data during the instance re-connect phase, the message server may:
- persist its state before stopping;
- re-read the persisted information immediately after startup and return it to outside clients in spite of the fact that the application server instances have not yet re-attached themselves to the message server.

The persisted information may be overwritten as the instances reconnect and the system computes new logon groups. The message server then returns to its normal mode of operation.

### Resume All Application Server Instances

The Step 4) from the above sequence, calls for the resumption of application servers instances. During the downtime of the SCS instance, all application server instances retry to connect to the SCS instance suppressing any error. As a consequence, after restarting the SCS instance, all application server instances should rapidly reconnect to the SCS (i.e. to the message server). But even after a successful reconnect they will stay in a stopped state.

Thus, in order to resume application server instances, the controlling sapstartsrv will send a request (MsSndResume) to the message server. The message server forwards the request to all application servers (MSERESUME) and sets "system suspend stopped". The system suspend file will be deleted as well.

The application servers will reset their internal state to: MS_SYSTEM_SERVICE_SERVER_SUSPENDED. New connects from application server will be rejected until the system is resumed.

The manner of handling other SCS clients is now described. In particular, logon group (LG) as well as the Web Dispatcher, are clients which temporarily connect to the message server to read system information.

There is no permanent TCP/IP connection between these clients and the message server. Two communication channels are offered by the message server:
- MS: connections based on the message server client library;
- HTTP: connections based on the HTTP protocol.
The logon group (LG) uses the message server connections. The Web Dispatcher uses HTTP connections.

The Web Dispatcher is robust against temporary failures of the message server lookups. It keeps the system information inside its system administration information as long as it cannot connect to the message server. HTTP requests will be dispatched based on the current system information.

Regarding the LG Layer, similar to the Web Dispatcher the idea is to make the LG layer robust against temporary failures of the message server lookups. There is already a cache inside the LG layer for certain types of logon groups. Caching could be extended to any kind of information in case of a failed lookup the LG layer can use the already read information instead of raising an error.

The patch procedure may be monitored as follows. The patch procedure includes several steps. Dedicated monitoring is used to visualize its progress and log any error.

There is no persistent state of the procedure. Its state only exists in the memory of the controlling sapstartsrv. Therefore any monitoring UI - such as SAP Microsoft Management console (MMC) asks the controlling sapstartsrv for state information.

SAP MMC provides a graphical user interface to display the state of the kernel patch procedure. If a system supports the online kernel patch feature, a "System Update" node appears in SAP MMC. It provides information for an ongoing online kernel patch. The right-click context menu of the "System Update" node provides "Update System..." to start a new online kernel patch and "View Update traces..." to access all protocol files.

In addition to this monitoring, the automated kernel is also visible inside the application server. The state of the application server instances may vary during their restart (column "kernel update info") and during the SCS instance restart (column "SCS state").

An additional header line may be displayed if the application server instance has been stopped. System log entries are written when an application server instance is restarted, stopped or resumed.

Error handling is described as follows. In cases of unrecoverable errors occurring during the automated kernel change procedure, a remedy is to just restart the entire system completely.

It is general good practice to keep a copy of the old kernel, in case the patched kernel causes problems. The fallback to an old kernel version can be done via the automated kernel change procedure again, unless the problem is so severe that vital system functions fail. In such a case, a complete restart may be necessary.

In summary, drawbacks to a conventional manual kernel change approach, may be overcome by applying an automated procedure for switching the kernel of a system. This automated procedure can be applied with small operational effort.

The impact on users and overall system functionality is kept to a minimum. This is accomplished by an automated procedure that restarts the instances of a system one-by-one, in order to activate the new kernel version. During the entire procedure the system remains running.

Of particular note within the automated procedure is the SCS (SAP Central Services) restart. Within that restart, a "Stop-the-world" approach is employed. Specifically, before restarting the SCS instance, all relevant SCS clients are suspended in order to avoid errors during the downtime of the SCS instance.

Suspending does not require shutdown of the clients. Instead, any processing is halted before calling an SCS service as long as the SCS instance is not available, and then processing is resumed. With this, the availability of the services could be increased, the downtime could be reduced and significant negative impact could be avoided.

Embodiments can aid in switching ABAP kernels without downtime and minimal impact. Furthermore, this procedure can be applied when the system needs to be reconfigured by starting it with new profile parameter settings and can lead to the reduction of total cost of ownership (TCO) on customer side.

Further, embodiments assist customers in quickly and easily consuming new ABAP kernels, and thus eases customer adoption of code.

By contrast, in conventional approaches customers may need to shut down the whole system in order to switch the ABAP kernel of their system (e.g. for installing a new kernel patch). This results in planned downtime, during which a system cannot be used for normal productive operations. For customers with global operations and mission-critical business functions, it becomes more and more important to maximize the system availability or minimize system downtime. Accordingly, an automated kernel change procedure according to embodiments, desirably allows a customer to consume new ABAP kernels with reduced system disruption.

The automated ABAP kernel switch procedure described herein, is an alternative to an existing manual procedure from SAP that is called the Rolling Kernel Switch (RKS). The RKS allows shutting down and restarting consecutively the application server instances by running different kernel patch levels in one system simultaneously. The downtime could be shortened by RKS. However, this RKS procedure is not automated. Furthermore, the ABAP central services (ASCS) instance also needs to be restarted manually, which can lead to the unavailability of those services and abortion of running service requests.

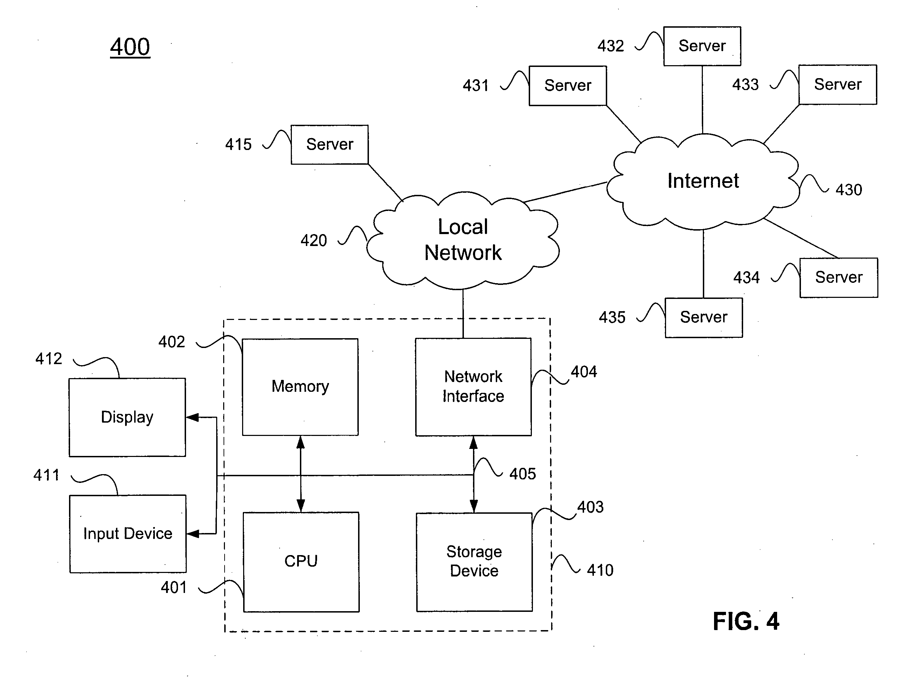

An example system 400 is illustrated in Fig. 4. Computer system 410 includes a bus 405 or other communication mechanism for communicating information, and a processor 401 coupled with bus 405 for processing information. Computer system 410 also includes a memory 402 coupled to bus 405 for storing information and instructions to be executed by processor 401, including information and instructions for performing the techniques described above, for example. This memory may also be used for storing variables or other intermediate information during execution of instructions to be executed by processor 401. Possible implementations of this memory may be, but are not limited to, random access memory (RAM), read only memory (ROM), or both. A storage device 403 is also provided for storing information and instructions. Common forms of storage devices include, for example, a hard drive, a magnetic disk, an optical disk, a CD-ROM, a DVD, a flash memory, a USB memory card, or any other medium from which a computer can read. Storage device 403 may include source code, binary code, or software files for performing the techniques above, for example. Storage device and memory are both examples of computer readable mediums.

Computer system 410 may be coupled via bus 405 to a display 412, such as a cathode ray tube (CRT) or liquid crystal display (LCD), for displaying information to a computer user. An input device 411 such as a keyboard and/or mouse is coupled to bus 405 for communicating information and command selections from the user to processor 401. The combination of these components allows the user to communicate with the system. In some systems, bus 405 may be divided into multiple specialized buses.

Computer system 410 also includes a network interface 404 coupled with bus 405. Network interface 404 may provide two-way data communication between computer system 410 and the local network 420. The network interface 404 may be a digital subscriber line (DSL) or a modem to provide data communication connection over a telephone line, for example. Another example of the network interface is a local area network (LAN) card to provide a data communication connection to a compatible LAN. Wireless links are another example. In any such implementation, network interface 404 sends and receives electrical, electromagnetic, or optical signals that carry digital data streams representing various types of information.

Computer system 410 can send and receive information, including messages or other interface actions, through the network interface 404 across a local network 420, an Intranet, or the Internet 430. For a local network, computer system 410 may communicate with a plurality of other computer machines, such as server 415. Accordingly, computer system 410 and server computer systems represented by server 415 may form a cloud computing network, which may be programmed with processes described herein. In the Internet example, software components or services may reside on multiple different computer systems 410 or servers 431-435 across the network. The processes described above maybe implemented on one or more servers, for example. A server 431 may transmit actions or messages from one component, through Internet 430, local network 420, and network interface 404 to a component on computer system 410. The software components and processes described above may be implemented on any computer system and send and/or receive information across a network, for example.

The above description illustrates various embodiments of the present invention along with examples of how aspects of the present invention may be implemented. The above examples and embodiments should not be deemed to be the only embodiments, and are presented to illustrate the flexibility and advantages of the present invention as defined by the following claims. Based on the above disclosure and the following claims, other arrangements, embodiments, implementations and equivalents will be evident to those skilled in the art and may be employed without departing from the spirit and scope of the invention as defined by the claims.

## Claims

1. A computer-implemented method comprising:
causing a central services instance to receive a kernel change instruction from a first control engine of a first application server;
in response to the kernel change instruction, causing a second control engine of the central services instance to suspend operation of the first application server and to suspend operation of a second application server;
causing the central services instance to restart operation with a new kernel; and
causing the new kernel of the central services instance, to resume operation of the first application server and of the second application server such that the first control engine instructs,
the second application server to restart with the new kernel, and
the first application server to restart with the new kernel.

2. The computer-implemented method of claim 1 wherein:
the second control engine instructs a message center of an old kernel of the central services instance to suspend operation, after suspension of operation of the first application server and of the second application server; and
the second control engine instructs a message center of the new kernel of the central services instance to resume operation prior to resuming operation of the first application server and of the second application server.

3. The computer-implemented method of claims 1 or 2 further comprising:
prior to the central services instance receiving the kernel change instruction, causing the first control engine to trigger a queue services instance to change from an old kernel to the new kernel.

4. The computer-implemented method of claim 3 wherein during restart of the central services instance, an existing queue table and a backup file are attached.

5. The computer-implemented method of claim 4 wherein the second control engine attaches the existing queue table and the backup file by:
attaching to an existing queue lock table shared memory,
halting a queue server of the old kernel,
stopping remaining processes of the old kernel, and
restarting the central services instance by signaling a queue server of the new kernel to reattach to the existing queue lock table shared memory.

6. The computer-implemented method of any one of claims 1 to 5 wherein the new kernel of the first application server, and the new kernel of the second application server, are each in communication with a database.

7. A non-transitory computer readable storage medium embodying a computer program for performing a method according to any one of claims 1 to 6.

8. A computer system comprising:
one or more processors;
a software program, executable on said computer system, the software program configured to:
cause a central services instance to receive a kernel change instruction from a first control engine of a first application server;
in response to the kernel change instruction, cause a second control engine of the central services instance to suspend operation of the first application server and to suspend operation of a second application server;
cause the central services instance to restart operation with a new kernel; and
cause the new kernel of the central services instance, to resume operation of the first application server and of the second application server such that the first control engine instructs,
the second application server to restart with a new kernel, and
the first application server to restart with a new kernel.

9. A computer system as in claim 8 wherein the computer program is configured to:
cause the second control engine to instruct a message center of an old kernel of the central services instance to suspend operation, after suspension of operation of the first application server and of the second application server; and
cause the second control engine to instruct a message center of the new kernel of the central services instance to resume operation prior to resuming operation of the first application server and of the second application server.

10. A computer system as in claims 8 or 9 wherein prior to the central services instance receiving the kernel change instruction, the computer program is further configured to:
cause the first control engine to trigger a queue services instance to change from an old kernel to a new kernel.

11. A computer system as in claim 10 wherein during restart of the central services instance, the computer program is configured to cause an existing queue table and a backup file to be attached.

12. A computer system as in claim 11 wherein the computer program is configured to cause second control engine to attach the existing queue table and the backup file by:
attaching to an existing queue lock table shared memory,
halting a queue server of the old kernel,
stopping remaining processes of the old kernel, and
restarting the central services instance by signaling a queue server of the new kernel to reattach to the existing queue lock table shared memory.

13. A computer system as in any one of claims 8 to 12 wherein the new kernel of the first application server, and the new kernel of the second application server, are each in communication with a database.
